# EUROPEAN PATENT APPLICATION

(11) **EP 4 224 432 A1**
(43) Date of publication of application: **09.08.2023**
(21) Application number: 22155245.8
(22) Date of filing: 04.02.2022
(51) Int. Cl.: G06V 10/77, G06V 10/74, G06V 40/16

(54) **DEVICE, SYSTEM AND METHOD FOR SPECTACLE FRAME IDENTIFICATION**

(71) Applicant: Carl Zeiss Vision International GmbH, 73430 Aalen (DE)
(72) Inventor: Hoyle, Ben, 81927 München (DE); Huber, Korbinian, 86150 Augsburg (DE); Sampeth, Sridhar, 560 099 Bangalore (IN)
(74) Representative: Witte, Weller & Partner Patentanwälte mbB

(57) **Abstract**

The present invention relates to automatic detection and identification of eye-wear frames in images. In particular, the present disclosure relates to a device (10) for spectacle frame identification, wherein the device is configured to perform the steps of: obtaining image data (20) of a spectacle frame (22) or image data of a subject (21) wearing the spectacle frame (22); identifying a spectacle frame (22') corresponding to the spectacle frame (22) in the image data; wherein identifying the spectacle frame (22') comprises determining a representation (30) of the spectacle frame (22) from the image data (20) in a compressed space. The present invention further relates to a corresponding system and method for spectacle frame identification and a corresponding computer program product.

## Description

### FIELD OF THE INVENTION

The present invention relates to automatic detection and identification of eye-wear frames in images. In particular, the present disclosure relates to a device for spectacle frame identification, a system for spectacle frame identification, a method for spectacle frame identification and a corresponding computer program product.

### BACKGROUND OF THE INVENTION

In the field of eyewear fashion, a large variety of different spectacle frames are available on the market. While a great selection is provided to customers, finding a desired spectacle frame can be a tedious and time-consuming task. A first approach are web-bases services wherein a user can virtually try on different spectacle frames. The user may upload an image of his face and different models of spectacle frame can be superimposed onto the image of the user's face. The user may thus conveniently flip through a large variety of different spectacle frames.

If the user is wearing his current eyeglasses, the eyeglasses may have to be detected and removed from the image before superimposing the new eyeglasses onto the image of the user. US 2007/0177793 A1 discloses a method and an apparatus to automatically detect and remove eyeglasses from an image. The method accesses digital image data representing an image including a face; detects eyeglasses in the image to produce a report about presence or absence of eyeglasses in the image; normalizes illumination of the image to obtain a normalized image; and removes eyeglasses from the normalized image to obtain a face image without eyeglasses. WO 2007/089027 A1 discloses a method and an apparatus to automatically detect a presence or absence of eyeglasses in an image by using nose ridge masking. Such eyeglass-removal techniques may be used to assist a user to virtually try on different eyeglasses with different spectacle frames.

US 10,922,579 B2 disclose a frame recognition system and method. According to its abstract, the disclosed embodiments shall provide an improved method for enabling consumers to identify and purchase a desired frame that is captured in an image. A frame recognition system is suggested that includes at least one processor for executing computer executable instructions for receiving an image; identifying a frame image from the image; performing image recognition using the frame image to identify a plurality of frames; retrieving merchant information corresponding to the plurality of frames; receiving merchant information associated with the plurality of frames; presenting the plurality of frames and the merchant information associated with the plurality of frames; receiving order information in response to a user ordering a frame from the plurality of frames; and processing the order information. Regarding the data processing, facial recognition software may be used to identify one or more faces in the image. Once the faces are identified in the image, a frame recognition module includes instructions for determining whether a person in the image is wearing a frame. For example, in one embodiment, the frame recognition module is configured to determine whether a person is wearing a frame by identifying a consistent change in color between a person's forehead region and eye region or along the nasal bridge. Other methods for identifying a frame in the image includes the use of histogram of oriented gradients (HOG), which are feature descriptors used in computer vision and image processing for the purpose of object detection. Still, another method for identifying a frame in the image may include using the Edge detection method to identify points in a digital image at which the image brightness changes sharply or, more formally, has discontinuities.

### SUMMARY OF THE INVENTION

It is an object of the present invention to better assist a customer or eye-care professional in finding a desired spectacle frame for the customer. More general, it is an object of the present invention to provide an improved device, system and method for identifying a spectacle frame in an image. It would be particularly advantageous to enable identification of a spectacle frame with improved accuracy and/or in a simplified manner and/or for a larger variety of different frames.

To better address one or more of these concerns, according to a first aspect of the invention, a device for spectacle frame identification is provided. The device is configured to perform the steps of:
- obtaining image data of a spectacle frame or image data of a subject wearing the spectacle frame;
- identifying a spectacle frame corresponding to the spectacle frame in the image data;
- wherein identifying the spectacle frame comprises determining a representation of the spectacle frame from the image data in a compressed space.

According to a second aspect, a system for spectacle frame identification is provided. The proposed system comprises the aforementioned device and a camera. As used herein, a camera may refer to an image acquisition device adapted to capture the image data, in particular to capture an image of a subject wearing the spectacle frame.

According to a further aspect, there is provided a computer-implemented method for spectacle frame identification, in particular through the use of a non-transitory computer readable medium, the method comprising the steps of:
- obtaining image data of a spectacle frame or image data of a subject wearing the spectacle frame;
- identifying a spectacle frame corresponding to the spectacle frame in the image data;
- characterized in that identifying the spectacle frame comprises determining a representation of the spectacle frame from the image data in a compressed space.

According to a further aspect, in particular a non-transitory, computer program product is presented comprising program code means for causing a computer to carry out the steps of the aforementioned method when the computer program is carried out on a computer or processing unit.

According to a further aspect, there is provided a machine-readable storage medium having stored thereon a computer program comprising program code means for carrying out the steps of the aforementioned method or one of its refinements.

Preferred embodiments of the invention are defined in the dependent claims. It shall be understood that the claimed device for spectacle frame identification, system, method, computer program and medium can have similar and/or identical refinements or preferred embodiments as the claimed device for spectacle frame identification, in particular as defined in the dependent claims and as disclosed herein.

The herein presented solutions can provide a possibility to further improve the identification of a spectacle frame in an image. A basic idea of the invention is that identifying the spectacle frame comprises determining a representation of the spectacle frame from the image data in a (machine- or computer-generated) compressed space, which can be constructed using advanced machine learning techniques such as Deep Convolutional Neural Networks. The representation of the spectacle frame from the image data in the compressed space can be compared with representations of known spectacle frames in said same compressed space to identify one or more matching frames of interest from the known spectacle frames. Accordingly, the inventors suggest a very flexible approach of transforming spectacle frames into representations in a compressed space and thereby provide a further improved machine-assisted selection of a desired spectacle frame.

In the following, some terms which are used throughout the application, shall be shortly explained and defined:

As used herein, obtaining image data can refer to receiving or retrieving image data previously acquired with a camera as an imaging device. The image data can also be obtained from a database or storage device via a communication interface. The imaging device and the device for spectacle frame identification can be implemented together or as a distributed device at different locations. For example, the camera may be part of mobile device such as a smartphone, whereas the device for spectacle frame identification may be implemented at least in part cloud-based or by a remote processing device. For example, the proposed device for spectacle frame identification may by implemented by a computer or computer system and provide service such as the identification result of the spectacle frame to a remote client device.

As used herein, a spectacle frame, also referred to as frame, may refer to a piece of eyewear i.e., a frame and/or lenses. The spectacle frame may comprise lenses, in particular spectacle lenses for vision correction or other aesthetic or functional lenses such as sunglasses or fashion lenses. The image data may comprise an image of the spectacle frame. The image data may comprise a person or subject wearing the spectacle frame, in particular a face of the subject wearing the spectacle frame. The image data may also comprise one or more images of the spectacle frame against different backgrounds. The term frame may refer generically to one or a plurality of eyewear glasses and lenses. The term lens and lenses may be referred to separately where necessary.

As used herein, an "eye-care professional" may refer to any entity which has a selection of frames and would like to provide these frames to consumers. The term comprises of, but is not limited to, online shops, marketplaces, opticians, salespeople, and other individuals.

The compressed space can be a compressed space constructed using machine learning. In particular, the compressed space can be a compressed space constructed using deep machine learning. Deep learning (also known as deep structured learning) is part of a broader family of machine learning methods based on artificial neural networks with representation learning. Learning can be supervised, semi-supervised or unsupervised. Deep-learning architectures such as deep neural networks, deep belief networks, deep reinforcement learning, recurrent neural networks and convolutional neural networks applied to field of computer vision, can provide results surpassing human expert performance. The adjective "deep" in deep learning can refer to the use of multiple layers in the (neural) network. Early work showed that a linear perceptron may not be a universal classifier, but that a network with a nonpolynomial activation function with one hidden layer of unbounded width can. Deep learning is a modern variation which can be concerned with an unbounded number of layers of bounded size, which can permit practical application and optimized implementation, while retaining some theoretical universality.

The compressed space is a compressed space constructed using a supervised or unsupervised data compression method. It is also possible to use mixed forms such as a semi-supervised data compression method. Supervised learning (SL) is the machine learning task of learning a function that maps an input to an output based on example input-output pairs. In supervised learning, each example is a pair consisting of an input object (typically a vector) and a desired output value (also called the supervisory signal). A supervised learning algorithm analyzes the training data and produces an inferred function, which can be used for mapping new examples. An advantage of supervised learning can be more accurate results. Unsupervised learning is a type of machine learning in which the algorithm is not provided with any pre-assigned labels or scores for the training data. As a result, unsupervised learning algorithms may first self-discover any naturally occurring patterns in that training data set. An advantage of unsupervised learning can be the reduced effort for providing training data sets. A further advantage can be faster adaptation to new types of spectacle frames. Common examples include clustering, where the algorithm automatically groups its training examples into categories with similar features, and principal component analysis, where the algorithm finds ways to compress the training data set by identifying which features are most useful for discriminating between different training examples and discarding the rest.

The compressed space can be a compressed space constructed using one or more convolutional neural networks. Convolutional networks can be a specialized type of neural networks that can use convolution in place of general matrix multiplication in at least one of their layers. In deep learning, a convolutional neural network (CNN, or ConvNet) can be a class of artificial neural network, well suited to analyze visual imagery. The one or more convolutional neural networks may be shift invariant and/or space invariant artificial neural networks (SIANN), for example based on a shared-weight architecture of one or more convolution kernels or filters that slide along input features and provide translation equivariant responses also referred to as feature maps. An advantage of this aspect can be that also imperfect image data of the spectacle frame can lead to very good results. In practical applications, the image data may only provide limited information about the geometric coordinates of the spectacle frame and its features within the image. For example, the spectacle frame of interested may be imaged decentered, tilted and/or at an unknown distance.

The compressed space may be a compressed space constructed using at least one of TSNe (t-Distributed Stochastic Neighbor Embedding), random forests, spectral embedding, and/or multi-dimensional principal component analysis. An advantage of these methods can be that decisive features of the spectacle frames can effectively be extracted in order to provide a meaningful result. In some implementations the compression algorithm may also use color information of the frames. However, the suggested approach can allow very efficient processing since the system automatically focusses on criteria with high information content. Thus, the processing speed can be further improved.

The device can be adapted to perform identification of the spectacle frame based on a pre-trained neural network. The device can be adapted to perform identification of the spectacle frame based on a pre-trained neural network for image segmentation, wherein only a limited subset of one or more final layers are trained for spectacle frame identification. An advantage of this embodiment can be improved efficiency. In particular for the fast-changing application scenario of eyewear fashion, this approach provides an efficient technical solution. However, is also possible to start from random initial conditions. It will be appreciated that the device can be adapted to determine and/or to extract the spectacle frame; in particular based on a Deep ML Covnet Segmentation.

The device can be adapted to perform the step of selecting one or more frames in a predetermined set of spectacle frames based on a distance metric to the identified spectacle frame. The identified spectacle frame is the spectacle frame identified in the step of identifying the spectacle frame corresponding to the spectacle frame in the image data. The distance metric can be a distance metric in the compressed space. Selecting the one or more frames in a predetermined set of spectacle frames based on a distance metric to the identified spectacle frame can comprise determining a distance metric between the representation of the spectacle frame from the image data in the compressed space and a representation of the spectacle frames from the predetermined set in said same compressed space. The distance metric may comprise an Euclidian distance and/or a cosine distance. Other distance metrics are also possible. A perfect identification of the actual spectacle frame may in many applications neither be necessary nor necessarily helpful for a subject, since a particular spectacle frame in the image data may be a model from previous seasons, which may no longer available, at least at a particular eye-wear specialist. Nonetheless, the identified frame may serve as a reference. It is also possible that the device is adapted to perform a two-stage process of first identifying the actual frame and then, in a subsequent step, identifying available frame most similar to the identified frame of interest. The device may be adapted for computation of "nearest match". The nearest match may identify which frames, from a selection of frames that an eye-wear specialist has in stock, or is able to sell, most closely resemble the frame in the image data. A predetermined set of spectacle frames may correspond to or may be a subset of any known spectacle frames. A predetermined set of spectacle frames may comprise a selection of spectacle frames available in an inventory, in particular an inventory that an eye-wear specialist has in stock or is able to sell.

In an embodiment, at least some dimensions of the (machine- or computer-generated) compressed space may correspond to human understandable spectacle frame properties. An advantage of this embodiment is that even though the compressed space is computer-generated, at least some dimensions can also be understood by humans. This may simplify finding respective spectacle frames in store. The human understandable frame properties can be one or more of a frame-shape, a frame thickness, a frame material, and/or one or more dimensions. In some implementation frame shapes are selected from, but not limited to, cat-eye, round, square, rectangular, pilot.

The device can be adapted to perform an image segmentation step prior identifying the spectacle frame from the image data. For example, a face detection step may be performed prior to identifying the spectacle frame in the image data. An advantage of this aspect is that the efficiency may be further improved. Because the spectacle frame can be expected in face region, it may not be necessary to analyze the entire image data, i.e., only a limited sub-region of the image has to be analyzed.

The device may be adapted to extract the spectacle frame from the image, in particular based on a Deep ML Covnet Segmentation. The spectacle frame may then be identified in a subsequent step, wherein identifying the spectacle frame comprises determining a representation of the extracted spectacle frame from the image data in a compressed space. Identifying the spectacle frame can again comprise comparing the extracted spectacle frame with a database of known spectacle frames and identifying a most similar frame. As a result of the identification, an identifier of one or more most similar frames may be provided as an output.

The device may be adapted to extract and remove the identified spectacle frame from the image data, i.e., extract and remove the identified spectacle frame from the image data of the subject wearing the spectacle frame to provide image of the subject, in particular of a face of the subject without the spectacle frame. Providing the image of the subject without the spectacle frame can be performed by DeepML GAN inpainting. DeepML GAN inpainting refers to inpainting using deep machine learning with generative adversarial networks. The device may be adapted to perform the steps of obtaining image data of a face of the subject wearing the spectacle frame; extracting and removing the spectacle frame from the image data; and providing image of the face of the subject without the spectacle frame.

It is to be understood that the features mentioned above and those yet to be explained below may be used not only in the combination respectively indicated, but also in other combinations or separately, without departing from the scope of the present invention.

### BRIEF DESCRIPTION OF THE DRAWINGS

These and other aspects of the invention will be apparent from and elucidated with reference to the embodiments described hereinafter. In the following drawings
- Fig. 1: shows a schematic drawing of a system for spectacle frame identification;
- Fig. 2: shows a flowchart of a method for spectacle frame identification;
- Fig. 3: shows a flowchart illustrating extraction of a spectacle frame from an image; and
- Fig. 4: shows flowchart illustrating spectacle frame identification.

### DESCRIPTION OF PREFERRED EMBODIMENTS

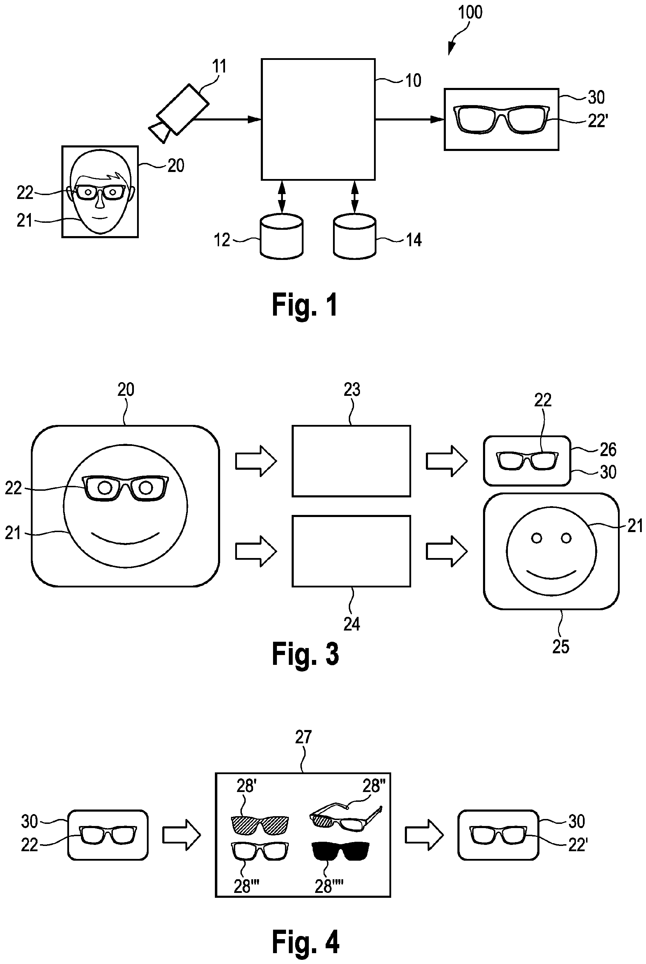

Fig. 1 shows an embodiment of system for spectacle frame identification. The system for spectacle frame identification is therein denoted in its entirety with reference numeral 100. In the depicted embodiment, the system 100 may comprisea device 10 for spectacle frame identification and a camera 11. The camera 11 is an image acquisition device adapted to capture image data 20, in particular to capture an image of a subject 21 wearing the spectacle frame 22. In addition, or in the alternative, the system 100 may be coupled to a database 12. The database may also comprise image data 20 of a subject wearing a spectacle frame. In such a case, a camera 11 would not be necessary. Further, also other image data of a spectacle frame may be provided such as just the frame with a different background.

The device 10 for spectacle frame identification is configured to perform the steps of obtaining image data 20 of a spectacle frame 22 and identifying a spectacle frame 30 from the image data. The image data can be obtained from the camera 11 or from a database 12. Accordingly, the device 10 comprises one or more communication interfaces for communication with the camera 11 or the database 12. Identifying the spectacle frame 22 comprises determining a representation of the spectacle frame from the image data in a compressed space. The compressed space can be a machine- or computer-generated compressed space which can be constructed using advanced machine learning techniques such as Deep Convolutional Neural Networks. This process will be explained in more detail further below for an example.

The system may further comprise a database 14. The database 14 may store representations of a large variety of different known spectacle frames in said compressed space. The device 10 can be coupled to the database 14 via a communication link. The device is adapted to compare the representation (30) of the spectacle frame (22) from the image data (20) in the compressed space to known spectacle frames in said compressed space of the database 14. A spectacle frame 22' can be determined from said database 14 which closely matches the spectacle frame 22 in the obtained image data 20. The comparison is based on the respective representation 30 of the spectacle frame 22 in the obtained image data 20 in said compressed space and the representation of the known spectacle frames of the database in the same compressed space. For example, a distance metric between the respective representations in said compressed space can be evaluated to identify which one or more spectacle frames in the database would be the closest to the representation 30 of the spectacle frame 22. In some embodiments, Euclidian distances may be used. In addition, or in the alternative, cosine distances or other distance metrics may be used.

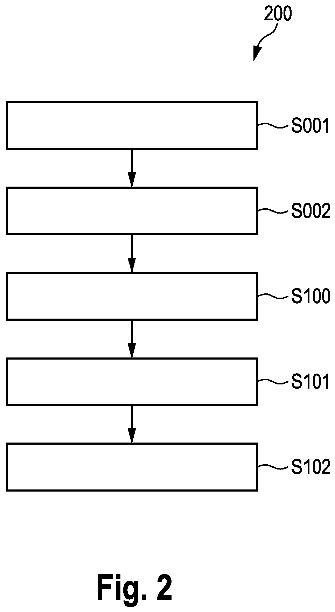

Fig. 2 shows a flowchart of a method 200 for spectacle frame identification according to an aspect of the present disclosure. The steps S001 and S002 can be seen as preparatory steps that are not necessarily carried out for each identification of another spectacle frame.

In step S001, training data can be obtained. A preferably large dataset of labelled images can be provided. These images may comprise people wearing different known frames and/or known spectacle frames against different backgrounds. In some embodiments the dataset may be generated from public datasets, such as advertising material or product catalogues, and in other implementations it is generated from private images, or combinations of public and private. The images may be automatically or manually marked, preferably at the pixel level, to identify which parts of the image correspond to a frame, which to a lens, and which to a person or other background.

In step S002, machine learning may be performed. Once the training data with labelled images is obtained, machine learning training can take place. In some implementations pre-trained networks can be used to learn the image segmentation, and only the final layers may be further trained. This may reduce the computational effort. In other implementations a segmentation algorithm may be trained from random initial conditions. Each spectacle frame is associated with a representation in the compressed space corresponding to the underlying machine-learning system or underlying neural network. This can be seen as a signature of a corresponding spectacle frame. The respective signatures can thus be used to identify a corresponding spectacle frame. These steps can enable the identification of frames and lenses from an input image. If the training data set is large and varied enough, then the algorithm can be suitable for the processing of images drawn from real, virtual and electronic photographs, videos, magazines, online content or other media sources.

This is also illustrated in Fig. 3 in more detail. Fig. 3 shows a flowchart of a method for spectacle frame identification. Image data 20 comprising a subject 21 and a spectacle frame 22 is provided as an input. The spectacle frame 22 can be extracted using techniques such as Deep Machine Learning Covnet Segmentation in step 23 to obtain an output image 26 of the spectacle frame 22. Besides the graphical output image 26 of the spectacle frame, the spectacle frame can also be described by its representation 30 in a compressed space corresponding to the underlying machine-learning system or underlying neural network. Optionally, as shown in the lower branch of Fig. 3, an image of the face of the subject 21 may be provided as an output image 25. Techniques such as DeepML GAN Inpainting, i.e., inpainting of the missing parts previously covered by the spectacle frame using deep machine learning generative adversarial networks.

Referring again to Fig. 2, in step S100 the image data to be analyzed for frame identification may be obtained. As described above with reference to Fig. 1, the image data of the spectacle frame may be acquired with a camera 11 or received or retrieved from a database 12.

In step S101, a spectacle frame corresponding to the spectacle frame in the image data is identified. Identifying the spectacle frame comprises determining a representation of the spectacle frame from the image data in the compressed space, as described above in particular with reference to Fig. 3.

Fig. 4 illustrates an exemplary embodiment of the further identification process in more detail. The determined representation 30 of the spectacle frame 22 in the compressed space is provided as an input and compared in step 27 with a plurality of representations 28'-28'" of different spectacle frames from the database 14 (see Fig. 1) in the compressed space. One or more nearest matches between the determined representation 30 of the spectacle frame 22 of the obtained image in the compressed space and the representations 28'-28"" of the spectacle frames of the database 14 in the compressed space can be computed. In the present example, the representation 28'" is determined to be the nearest match and provide as an output spectacle frame 22'. If the spectacle frame 22 in the image and the output spectacle frame 22' are identical, they may have an identical representation 30 in the compressed space.

However, in an optional further step S102, the device may be adapted to provide alternative suggestions. For example, the device may be adapted to identify which frames, from a selection of frames that an eye-wear specialist has in stock, or is able to sell, most closely resemble the frame in the image data.

In the following the aspect of determining the compressed space is described in more detail. Similar to training the segmentation of separating the frame from a subject's face or background, to perform this task, first a large dataset of training data with frame images and information or meta-data is obtained. Then a representational, or compressed, space can be constructed by processing all of the frame images or meta-data. To construct the compressed space, a collection of supervised and unsupervised data compression methods may be used including, but not limited to, deep machine learning and/or the use of convolutional neural networks, TSNe, random forests, spectral embedding, and multi-dimensional principal component analysis. In some implementations the compression algorithm may also use HTML color information, or other color representations of the frames. In some implementations the compression may comprise items in human understandable language, such as frame-shape, and other properties such as frame thickness, material, and dimensions. In some implementation frame shapes are selected from, but not constrained to, cat-eye, round, square, rectangular, pilot.

Once the compressed space is constructed, a desired set of spectacle frames such as all or some of the frames that an eye-care professional, or entity, is able to sell, herein referred to as eye-care professional's catalogue, can be processed to determine the representation of these spectacle frames in the compressed space. The frame or frames images of interest are passed through the same compression algorithm and reside somewhere in the representational space generated before.

Finally, a distance metric can be chosen to identify which frames in eye-care professional's catalogue are the closest. In some implementation Euclidian distances may be used. In other implementations cosine distances and/or other distance metrics, or any combination of the metrics may be used. If the distance metric is very small this means that the match is exact, and the frames have been exactly identified. If the distance metric is larger this means that similar frames have been identified.

Afterwards the frames which are in the catalogue of the eye care professional and are identified as being nearest to those frames of interest can be returned to a user. In some implementations only an ID of a frame may be returned. In other implementations and image of the closest frame or frames may be returned. In yet other implementations the closest frame or frames may be returned after first being superimposed by a virtual try service, onto an image submitted by the consumer, health care professional, and or an automated API service, and may show how the consumer would look if they were wearing the frames.

In conclusion, a device, system and method for spectacle frame identification are provided that can help to better assist a customer or eye-care professional in finding a desired spectacle frame for the customer. The proposed solution may enable identification of a spectacle frame with improved accuracy and/or in a simplified manner and/or for a larger variety of different frames.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Device (10) for spectacle frame identification, wherein the device is configured to perform the steps of:
- obtaining image data (20) of a spectacle frame (22) or image data of a subject (21) wearing the spectacle frame (22);
- identifying a spectacle frame (22') corresponding to the spectacle frame (22) in the image data;
**characterized in that** identifying the spectacle frame (22') comprises determining a representation (30) of the spectacle frame (22) from the image data (20) in a compressed space.

2. Device according to any of the preceding claims, **characterized in that** the compressed space is a compressed space constructed using machine learning or deep machine learning.

3. Device according to claim 1 or 2, **characterized in that** the compressed space is a compressed space constructed using a supervised data compression method.

4. Device according to claim 1 or 2, **characterized in that** the compressed space is a compressed space constructed using an unsupervised data compression method.

5. Device according to any of the preceding claims, **characterized in that** the compressed space is a compressed space constructed using one or more convolutional neural networks.

6. Device according to any of the preceding claims, **characterized in that** the compressed space is a compressed space constructed using at least one of t-Distributed Stochastic Neighbor Embedding (TSNe), random forests, spectral embedding, and/or multi-dimensional principal component analysis.

7. Device according to any of the preceding claims, **characterized in that** identification is performed based on a pre-trained neural network or a pre-trained neural network for image segmentation, wherein only a limited subset one or more final layers are trained for spectacle frame identification.

8. Device according to any of the preceding claims, **characterized in that** the device is further configured to perform the step of selecting one or more frames in a predetermined set of spectacle frames based on a distance metric to the identified spectacle frame (22'), the identified spectacle frame being the spectacle frame identified in the step of identifying the spectacle frame (22') corresponding to the spectacle frame (22) in the image data.

9. Device according to claim 8, **characterized by** selecting the one or more frames in a predetermined set of spectacle frames based on a distance metric to the identified spectacle frame comprises determining a distance metric between the representation of the spectacle frame from the image data in the compressed space and a representation of the spectacle frames from the predetermined set of spectacle frames in said same compressed space.

10. Device according to any of claims 8 to 9, **characterized in that** the predetermined set of spectacle frames comprises a selection of spectacle frames available in an inventory.

11. Device according to any of the preceding claims, further adapted to perform an image segmentation step prior identifying the spectacle frame from the image data.; or a face detection step.

12. Device according to any of the preceding claims, **characterized in that** the device is further adapted to remove the identified spectacle frame from image data to provide image of the face of the subject without the spectacle frame or to remove the identified spectacle frame from image data to provide image of the face of the subject without the spectacle frame by DeepML GAN Inpainting.

13. System (100) for spectacle frame identification, the system comprising
- a camera (11); and
- a device (10) according to any of the preceding claims.

14. A computer implemented method (200) for spectacle frame identification, the method comprising the steps of:
- obtaining image data (20) of a spectacle frame (22) or image data of a subject (21) wearing the spectacle frame (22);
- identifying a spectacle frame (22') corresponding to the spectacle frame (22) in the image data;
- **characterized in that** identifying the spectacle frame (22') comprises determining a representation (30) of the spectacle frame (22) from the image data (20) in a compressed space.

15. A computer program product comprising program code means for causing a computer to carry out the steps of the method as claimed in claim 14 when the computer program is carried out on a computer or processing unit.
